Europäisches Patentamt

(19) European Patent Office

Office européen des brevets

(11) **EP 0 613 793 B1**

(12) **FASCICULE DE BREVET EUROPEEN**

(45) Date de publication et mention
de la délivrance du brevet:
**02.10.1996 Bulletin 1996/40**

(51) Int. Cl.<sup>6</sup>: **B60C 11/00**, B60C 3/00

(21) Numéro de dépôt: **94102271.7**

(22) Date de dépôt: **15.02.1994**

(54) **Pneumatique à deux bandes de roulement et rainure de forme adaptée**

Luftreifen mit zwei Laufflächen und einer Rille

Tyre having two treads and a groove

(84) Etats contractants désignés:
**DE ES FR GB IT**

(30) Priorité: **01.03.1993 FR 9302538**

(43) Date de publication de la demande:
**07.09.1994 Bulletin 1994/36**

(73) Titulaire: **COMPAGNIE GENERALE DES
ETABLISSEMENTS
MICHELIN - MICHELIN & CIE
63040 Clermont-Ferrand Cédex (FR)**

(72) Inventeurs:
• **Gerard, François
F-63200 Riom (FR)**
• **Peyraud, Patrice
F-63400 Chamalieres (FR)**

(74) Mandataire: **Devaux, Edmond-Yves
Michelin & Cie
Service SRK. Brevets
23, Place des Carmes
63040 Clermont-Ferrand Cédex (FR)**

(56) Documents cités:
**EP-A- 0 465 786          WO-A-90/14239**

## Description

L'invention concerne un pneumatique avec une grande surface de contact avec le sol, subdivisée en plusieurs surfaces et plus particulièrement un pneumatique comprenant entre deux bandes de roulement espacées axialement un raccordement renforcé en son milieu par une tringle.

Le brevet FR 2 187 560 décrit un tel pneumatique avec une armature indépendante dans chaque bande de roulement, et un raccordement présentant de part et d'autre de la tringle méridienne sensiblement la même structure, le même profil d'équilibre à l'état gonflé d'armature de carcasse et par conséquent la même flexibilité que les zones flexibles des deux flancs, c'est-à-dire les zones de flanc voisines des bandes de roulement. Chaque portion de raccordement et chaque zone flexible de flanc ont sensiblement la même hauteur radiale, cette hauteur étant choisie de façon que le profil méridien d'équilibre de la portion de raccordement et de la zone flexible de flanc soit tangent à un plan perpendiculaire à l'axe du pneumatique en un point proche des extrémités radialement intérieures desdites zones et portions.

Si le pneumatique ainsi constitué procure une très bonne adhérence à grande vitesse à la fois sur sol sec, sur sol mouillé ou très mouillé, la zone de raccordement renforcée en son milieu par la tringle présente un manque d'endurance évident.

Le problème à la base de l'invention est de remédier à cet état de choses en améliorant l'endurance du pneumatique considéré, tout en permettant un très bon comportement en hydroplanage.

A cet effet un pneumatique comportant au moins deux bandes de roulement espacées axialement l'une de l'autre par une zone de raccordement comprenant une rainure et en son milieu une tringle de renforcement, de rayon inférieur à celui des bandes de roulement et radialement à l'intérieur de laquelle passe une armature de carcasse radiale, ancrée dans chaque bourrelet à au moins une tringle, cette armature étant surmontée radialement d'au moins une armature de sommet formée d'au moins deux nappes de fils ou câbles inclinés par rapport à la direction circonférentielle d'un angle compris entre 10° et 50°, caractérisé en ce que

- la rainure de raccordement entre les deux bandes de roulement a une largeur, mesurée au niveau des surfaces de bandes de roulement, comprise entre 0,10 et 0,25 fois la largeur globale des deux bandes de roulement, une profondeur au moins égale à 0,6 $(R_S - R_E)$, et des parois inclinées par rapport à une perpendiculaire à la surface de roulement d'un angle α compris entre 15° et 25°, ces deux parois se réunissant radialement à l'intérieur par une portion cylindrique tangente auxdites parois, et en ce que le rayon $R_T$ du centre de gravité de la section transversale de la tringle de renforcement soit au moins égal à

$$R_E + 0,1 (R_S - R_E)$$

$R_S$ étant le rayon des points de l'armature de carcasse les plus éloignés de l'axe de rotation,
$R_E$ étant le rayon des points de l'armature de carcasse les plus éloignés axialement du plan equatorial du pneumatique, les rayons $R_S$, $R_E$, $R_T$ étant mesurés par rapport à l'axe de rotation du pneumatique.

La forme de la section transversale de la rainure de raccordement ainsi décrite, combinée à la position radiale de la tringle de renforcement permet de minimiser les contraintes en fond de rainure et en conséquence de minimiser l'initiation de griffures ou fissures par les objets plus ou moins coupants du sol sur lequel roule le pneumatique ainsi que l'initiation de fissures de fatigue, et de minimiser la vitesse de propagation des fissures.

La position radiale de la tringle de renforcement de la zone de raccordement permettant un travail plus homogène de ladite tringle lors du passage dans l'ellipse de contact, et la vitesse de propagation des fissures étant fortement réduite, les risques de décollages autour de la tringle sont amoindries efficacement.

Afin de réduire le plus possible la vitesse de propagation des fissures initiées soit par coupures, soit par fatigue, il est avantageux, comme connu en soi, que la couche de vulcanisat caoutchouteux, formant d'une part le fond de la rainure de raccordement et d'autre part recouvrant radialement la tringle de renforcement, soit de formulation identique au vulcanisat employé pour les gommes extérieures des flancs du pneumatique. Préférentiellement, cette couche de vulcanisat sera renforcée par au moins une nappe de fils ou câbles, orientés par rapport à la direction circonférentielle d'un angle compris entre 0° et 90°, cette ou ces nappes(s) étant radialement disposées(s) approximativement au milieu de ladite couche de vulcanisat.

L'armature de carcasse du pneumatique de l'invention peut être surmontée radialement soit d'une armature de sommet unique, c'est-à-dire une armature dont les nappes s'étendent axialement du bord axialement extérieur d'une des bandes de roulement au bord axialement extérieur de l'autre bande de roulement, soit d'un armature de sommet dont l'une des nappes est continue axialement de bord à bord et l'autre formée de deux parties distinctes, soit de deux armatures de sommet distinctes, chacune desdites armatures renforçant une bande de roulement.

La ou les nappe(s) renforçant la couche de vulcanisat sous rainure et sur tringle peuvent être la ou les nappes(s) axialement continues de l'armature de sommet. Dans le troisième cas de deux armatures de sommet distinctes, la ou les nappe(s) renforçant la couche de vulcanisat seront avantageusement formée(s) de fils ou câbles, de préférence textiles et orientés par rapport à la direction circonférentielle d'un angle compris entre 0° et 90°, les valeurs 0° et 90° étant incluses dans l'intervalle. La (les) largeur(s) de cette (ces) nappe(s) peut (peuvent) être telle(s) que leurs bords axiaux ne soient pas radialement juxtaposés aux bords axialement intérieurs des deux armatures de sommet. La (les) largeur(s) de la(des)dite(s) nappe(s) seront cependant avantageusement telles que leurs bords axiaux se juxtaposent radialement aux bords des armatures de sommet, soit que lesdits bords de nappes soient localisés radialement sur les bords des armatures de sommet, soit qu'ils soient localisés radialement sous les bords desdites armatures.

De manière surprenante, l'initiation par fatigue de fissures ou craquelures en fond de rainure centrale, ainsi que la propagation de ces fissures peuvent être minimisées par la présence entre l'armature de carcasse et la tringle de renforcement d'au moins une couche de fils ou câbles.

Préférentiellement la largeur de cette couche sera telle qu'il y ait continuité de renforcement entre les bords axialement extérieurs des bandes de roulement. Ainsi cette couche peut être consitutée par une des nappes de l'armature de sommet unique du pneumatique, ou par deux nappes de ladite armature, mais elle est préférentiellement constituée d'au moins une nappe de fils ou câbles textiles orientés par rapport à la direction circonférentielle d'un angle compris entre 0° et 90°, les valeurs 0° et 90° étant incluses et dont la largeur sera telle que ses bords soient radialement juxtaposés aux bords axialement intérieurs des deux armatures distinctes renforçant respectivement les deux bandes de roulement.

L'ensemble des couches de renforcement d'une part au dessus de la tringle de renforcement, d'autre part entre ladite tringle et l'armature de carcasse, permet une tenue remarquable du pneumatique vis-à-vis de la résistance à la fatigue étudiée.

Les caractéristiques et avantages de la présente invention seront mieux compris à l'aide de la description qui suit et qui se réfère au dessin illustrant à titre non limitatif des exemples d'exécution et sur lequel

- la figure 1 représente une section transversale d'un pneumatique de dimension 235-45-17X conforme à une variante de l'invention ;

- la figure 2 représente une vue transversale agrandie de la portion de section (A) de la figure 1 ;

- la figure 3 représente une variante de la figure 2, relative à l'architecture des nappes de renforcement des couches caoutchouteuses sous et sur tringle de renfort ;

- la figure 4 représente une autre variante, relative à un pneumatique comprenant une armature de sommet dont l'une des nappes est axialement continue.

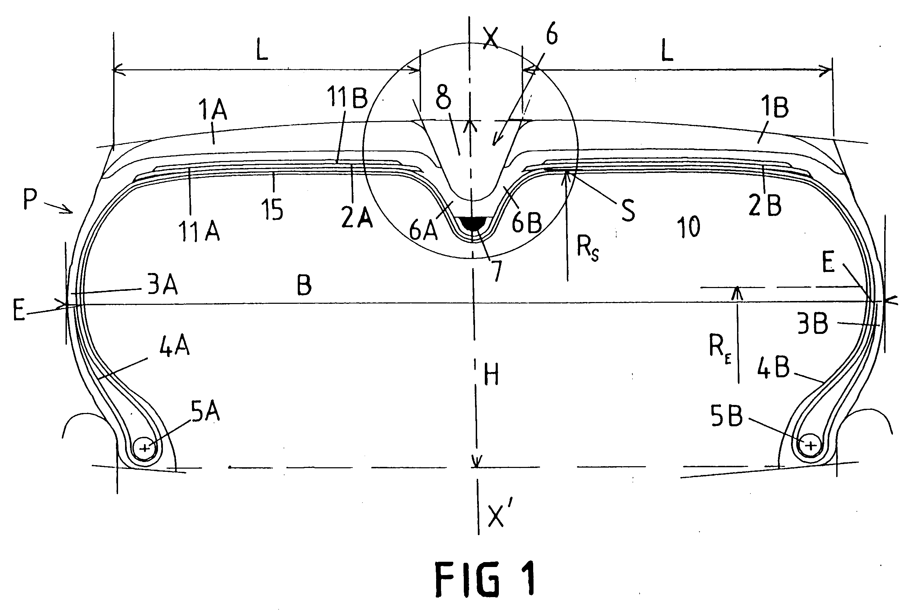

Le pneumatique P représenté sur la figure 1 et dénommé 235-45-17X a un rapport de forme H/B nominal égal à O,45, H étant la hauteur sur jante et B la largeur axiale maximale. Il comprend deux bandes de roulement identiques (1A) et (1B) renforcées par deux armatures de sommet identiques (2A) et (2B), ces armatures (2A) et (2B) étant constituées chacune de deux nappes (11A) et (11B) de câbles métalliques parallèles entre eux dans chaque nappe et croisés d'une nappe à la suivante en formant avec la direction circonférentielle du pneumatique un angle de 25°.

Il comprend en outre deux flancs (3A) et (3B) se terminant par des bourrelets (4A) et (4B) contenant chacun une tringle de type tressée (5A) et (5B). Les deux bandes de roulement (1A) et (1B) sont reliées par une zone de raccordement (6), constituée de deux portions de flanc (6A) et (6B), entourant une rainure (8) et d'une tringle (7).

L'armature de carcasse (10) est composée d'un unique nappe (10) de câbles textiles disposés radialement, qui s'étend, vue en section transversale (figure 1) de la tringle (5A) dans le flanc (3A) puis sous la bande de roulement (1A), pour ensuite suivre les portions (6A) et (6B) en passant radialement sous la tringle de renforcement (7), et rejoindre par un tracé symétrique la tringle (5B) du bourrelet (4B). Les points S de cette armature (10) les plus éloignés de l'axe de rotation du pneumatique sont à une distance $R_S$ de cet axe.

Les points E de cette armature (10) les plus éloignés axialement du plan équatorial (XX') sont distants de l'axe de rotation d'une quantité $R_E$. Dans le cas étudié, $R_S$ et $R_E$ sont respectivement égaux à 306 mm et 272 mm.

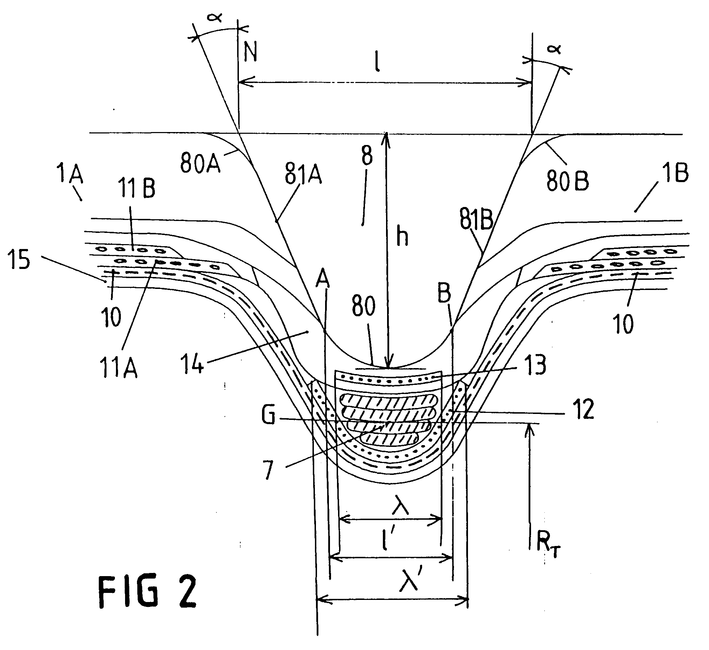

Sur la figure 2, la rainure (8) de la zone de raccordement (6) possède deux parois (81A) et (81B) rectilignes et inclinées par rapport à une normale N à la surface de roulement d'un angle ($\alpha$) égal à 23°. Ces parois (81A) et (81B) sont reliées aux surfaces de bandes de roulement (1A) et (1B) par des portions circulaires (80A) et (80B) alors qu'elles sont réunies entre elles par une portion circulaire (80), qui leur est tangente aux points A et B, pour former le fond de rainure. Cette rainure (8) a une profondeur (h) égale à 24 mm, soit 0,7 ($R_S$ - $R_E$) et supérieure à 0,6 ($R_S$ - $R_E$) de 3,6 mm, $R_S$ et $R_E$ étant montrés sur la figure 1. La profondeur (h) est la distance séparant la droite fictive réunissant les deux bords intérieurs des bandes de roulement (1A) et (1B) du point C du fond de rainure (80), le plus proche de l'axe de rotation du pneumatique. Cette rainure (8) a une largeur axiale (l) égale à 31 mm, cette largeur étant mesurée entre les deux points d'intersection formés par les parois de rainure (81A) et (81B) et les traces des surfaces de bandes de roulement (1A) et (1B). Cette largeur l est égale à 0,17 fois la largeur globale des deux bandes de roulement (1A) et (1B). Il faut entendre par largeur globale la somme des deux largeurs L de bandes de roulement.

Quant à la tringle (7) de renforcement de la zone de raccordement (6) elle est une tringle de type paquet obtenue par enroulement sur une forme appropriée d'un fil métallique, (les couches seules étant représentées et les fils ne l'étant pas) et possède d'autre part une section transversale dont le centre de gravité G est distant radialement de l'axe de rotation d'un rayon $R_T$ égal à 289 mm, supérieur à la quantité $R_E + 0,1 (R_S - R_E)$. On a constaté conformément à l'invention que si la distance $R_T$ était choisie inférieure à cette quantité, la stabilité du pneumatique gonflé pourrait être dégradée.

Entre le fond de rainure (80) et la face radialement extérieure de la tringle (7) est disposé un mélange caoutchouteux (14), formant en particulier le fond de rainure (80). Le mélange (14) est de même qualité que le mélange de gomme recouvrant les flancs (3A) et (3B). Il est renforcé par une nappe (13) de câbles textiles, de largeur λ égale à 10 mm, cette largeur λ étant égale à 0,8 fois la largeur l', distance axiale séparant les points A et B de tangence des parois (81A) et (81B) avec le fond de rainure (80) et appelée largeur de fond de rainure (80). Les câbles de cette nappe (13) font avec la direction circonférentielle du pneumatique un angle α1 de 0°.

Cette nappe (13) fait barrière à la propagation des fissures vers la tringle de renforcement (7). La zone de raccordement (6) est complétée par une nappe de renfort (12) de l'armature de carcasse (10). Cette nappe de renfort (12), formée de câblés textiles faisant avec la direction circonférentielle un angle α2 égal à 0° dans cet exemple, est disposée radialement entre la face radialement intérieure de la tringle (7) et l'armature de carcasse (10), et possède une largeur λ' telle qu'elle puisse isoler l'armature de carcasse (10) de la tringle (7), la largeur λ' étant la distance axiale, mesurée parallèlement à l'axe de rotation, séparant les extrémités de la nappe.

Le pneumatique ainsi décrit est généralement employé sans chambre à air et comprend en conséquence une couche de gomme intérieure (15) à base de vulcanisat imperméable aux gaz de gonflage susceptibles d'être utilisés pour le gonflage du pneumatique.

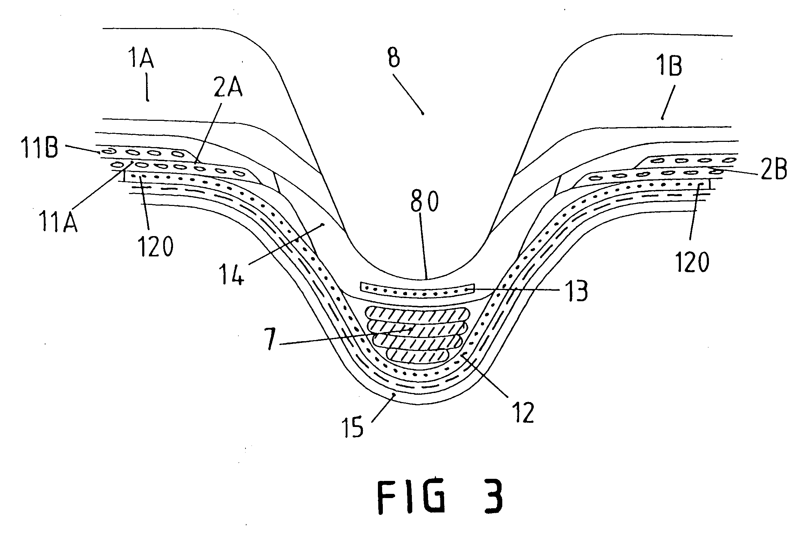

La figure 3 ne diffère de la figure 2 que par l'accroissement de la largeur axiale de la nappe de renfort (12), située entre la tringle de renforcement centrale (7) et l'armature de carcasse (10). Cet accroissement est tel que les extrémités (120) de la nappe (12) de part et d'autre du sillon central (8) sont accolées radialement sous les armatures de sommet respectivement (2A), (2B).

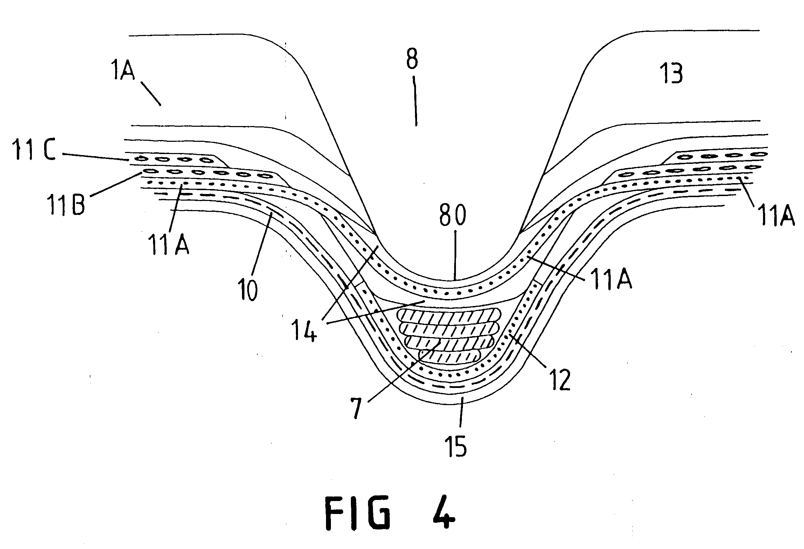

La figure 4 représente une autre variante dans laquelle l'armature de sommet renforçant le pneumatique P est composée d'une nappe radialement intérieure (11A) continue sur toute la largeur axiale du pneumatique, cette nappe étant formée de câbles textiles faisant avec la direction circonférentielle du pneumatique un angle de 0°, et étant radialement surmontée de part et d'autre du sillon (8) d'une ou plusieurs nappes de sommet supplémentaires respectivement (11B) et (11C) en câbles métalliques.

La nappe radialement intérieure (11A), continue, remplace la nappe de câbles (13) de la figure 2 alors que l'architecture restante est inchangée.

## Revendications

1. Pneumatique comportant au moins deux bandes de roulement (1A) et (1B) espacées axialement l'une de l'autre par une zone de raccordement (6) comprenant une rainure (8) et en son milieu une tringle de renforcement (7) de rayon $R_T$ inférieur à celui des bandes de roulement (1A) et (1B) et radialement à l'intérieur de laquelle passe une armature de carcasse radiale (10) ancrée dans chaque bourrelet (4A, 4B) à au moins une tringle d'ancrage (5A, 5B), cette armature (10) étant surmontée radialement d'au moins une armature de sommet formée d'au moins deux nappes de fils ou câbles inclinés par rapport à la direction circonférentielle d'un angle compris entre 10° et 50° et renforçant les bandes de roulement (1A) (1B) de largeur L, caractérisé en ce que :

   - la rainure de raccordement (8) entre les deux bandes de roulement (1A) et (1B) a une largeur l, mesurée au niveau des surfaces des bandes de roulement, comprise entre 0,1 et 0,25 fois la largeur globale 2L des bandes de roulement (1A), (1B), une profondeur h au moins égale à 0,6 $(R_S - R_E)$ et des parois (81A) (81B) inclinées par rapport à une perpendiculaire N à la surface de roulement d'un angle α compris entre 15 et 25°, ces deux parois (81A) et (81B) se réunissant radialement à l'intérieur par une portion cylindrique (80) tangente auxdites parois et en ce que :

   - le rayon $R_T$ du centre de gravité G de la section transversale de la tringle (7) de renforcement soit au moins égal à $R_E + 0,1 (R_S - R_E)$, $R_S$ étant le rayon des points S de l'armature de carcasse (10) les plus éloignés de l'axe de rotation du pneumatique et $R_E$ étant le rayon des points E de l'armature de carcasse (10) les plus éloignés axialement du plan équatorial XX' du pneumatique.

2. Pneumatique selon la revendication 1, caractérisé en ce que la couche de vulcanisat (14), formant le fond de rainure (80) et située radialement au dessus de la tringle (7), est renforcée par au moins une nappe de câblés (13), cette nappe étant localisée radialement sensiblement au milieu de la couche (14).

3. Pneumatique selon la revendication 2, caractérisé en ce que la nappe de renforcement de la couche (14) est une des nappes (11A) (11B) (11C) continue de l'armature de sommet (2), les autres nappes (11A, 11B, 11C...) de ladite armature (2) étant axialement discontinues et formant des blocs (2A, 2B) renforçant séparément les bandes de roulement (1A, 1B).

4. Pneumatique selon la revendication 2, caractérisé en ce qu'il comprend deux armatures de sommet (2A, 2B) distinctes, de part et d'autre de la rainure centrale (8), la nappe de renforcement (13) de la couche (14) étant indépendante des armatures de sommet (2A) et (2B) et ayant une largeur axiale $\lambda$ sensiblement égale à la largeur axiale du fond de la rainure (8).

5. Pneumatique selon la revendication 2, caractérisé en ce qu'il comprend deux armatures de sommet (2A, 2B) distinctes, de part et d'autre de la rainure centrale (8), la nappe de renforcement (13) de la couche (14) étant indépendante des armatures de sommet (2A, 2B), et ayant une largeur axiale telle que ses bords axiaux se juxtaposent radialement aux bords axialement intérieurs, respectivement des armatures de sommet (2A) et (2B).

6. Pneumatique selon l'une des revendications 1 à 5, caractérisé en ce que, entre la tringle de renforcement (7) et l'armature de carcasse (10), est disposée radialement au moins une nappe de fils ou câblés (12).

7. Pneumatique selon la revendication 6, caractérisé en ce que la nappe disposée radialement à l'intérieur de la tringle (7) est l'une des nappes (11A) (11B) (11C) continue de l'armature de sommet (2), les autres nappes (11A, 11B, 11C...) da ladite armature (2) étant axialement discontinues et formant des blocs (2A, 2B) renforçant séparément les bandes de roulement (1A, 1B).

8. Pneumatique selon la revendication 6, caractérisé en ce qu'il comprend deux armatures de sommet (2A, 2B) distinctes, de part et d'autre de la rainure centrale (8), la nappe de renforcement (12) disposée radialement à l'intérieur de la tringle (7) étant indépendante des armatures de sommet (2A) et (2B) et ses extrémités étant axialement distantes d'une quantité $\lambda'$ sensiblement équivalente à la largeur axiale l' du fond de rainure (8).

9. Pneumatique selon la revendication 6, caractérisé en ce qu'il comprend deux armatures de sommet (2A, 2B) distinctes, situées de part et d'autre de la rainure centrale (8), la nappe de renforcement (12) disposée radialement à l'intérieur de la tringle (7), étant indépendante des armatures de sommet (2A, 2B), et ayant une largeur axiale telle que ses bords axiaux se juxtaposent radialement aux bords axialement intérieurs respectivement des armatures (2A) et (2B).

## Claims

1. A tyre comprising at least two treads (1A and 1B) which are spaced axially from one another by a connecting region (6) comprising a groove (8) and, at its centre, a reinforcement bead wire (7) of radius $R_T$ less than that of the treads (1A) and (1B) and radially on the inside of which a radial carcass reinforcement (10) passes which is anchored in each bead (4A, 4B) to at least one anchoring bead wire (5A, 5B), said reinforcement (10) being radially surmounted by at least one crown reinforcement formed of at least two plies of cords or cables inclined by an angle of between 10° and 50° with respect to the circumferential direction and reinforcing the treads (1A) (1B) of width L, characterised in that:

   - the connecting groove (8) between the two treads (1A) and (1B) has a width l, measured at the level of the tread surfaces, of between 0.1 and 0.25 times the total width 2L of the treads (1A), (1B), a depth h at least equal to $0.6(R_S - R_E)$ and walls (81A), (81B) inclined with respect to a perpendicular N to the travel surface by an angle $\alpha$ of between 15° and 25°, these two walls (81A) and (81B) being connected radially on the inner side by a cylindrical portion (80) tangent to said walls, and in that:
   - the radius $R_T$ of the centre of gravity G of the transverse section of the reinforcement bead wire (7) is at least equal to $R_E + 0.1(R_S - R_E)$, $R_S$ being the radius of the points S of the carcass reinforcement (10) furthest from the axis of rotation of the tyre, and $R_E$ being the radius of the points E of the carcass reinforcement (10) furthest axially from the equatorial plane XX' of the tyre.

2. A tyre according to Claim 1, characterised in that the layer of vulcanised rubber (14) forming the groove bottom (80) and located radially above the bead wire (7) is reinforced by at least one ply of cables (13), this ply being located radially substantially at the centre of the layer (14).

3. A tyre according to Claim 2, characterised in that the reinforcement ply of the layer (14) is one of the continuous plies (11A) (11B) (11C) of the crown reinforcement (2), the other plies (11A, 11B, 11C, etc.) of said reinforcement (2) being axially discontinuous and forming blocks (2A, 2B) separately reinforcing the treads (1A, 1B).

4. A tyre according to Claim 2, characterised in that it comprises two distinct crown reinforcements (2A, 2B) on opposite sides of the central groove (8), the reinforcement ply (13) of the layer (14) being independent of the crown reinforcements (2A) and (2B) and having an axial width $\lambda$ substantially equal to the axial width of the bottom of the groove (8).

5. A tyre according to Claim 2, characterised in that it comprises two distinct crown reinforcements (2A, 2B) on opposite sides of the central groove (8), the reinforcement ply (13) of the layer (14) being independent of the crown reinforcements (2A, 2B) and having an axial width such that its axial edges are juxtaposed radially with the axially inner edges of the crown reinforcements (2A) and (2B), respectively.

6. A tyre according to one of Claims 1 to 5, characterised in that at least one ply of cords or cables (12) is arranged radially between the reinforcement bead wire (7) and the carcass reinforcement (10).

7. A tyre according to Claim 6, characterised in that the ply which is arranged radially on the inside of the bead wire (7) is one of the continuous plies (11A), (11B), (11C) of the crown reinforcement (2), the other plies (11A, 11B, 11C etc.) of said reinforcement (2) being axially discontinuous and forming blocks (2A, 2B) which separately reinforce the treads (1A, 1B).

8. A tyre according to Claim 6, characterised in that it comprises two distinct crown reinforcements (2A, 2B) on opposite sides of the central groove (8), the reinforcement ply (12) arranged radially to the inside of the bead wire (7) being independent of the crown reinforcements (2A) and (2B) and its ends being axially spaced by an amount $\lambda'$ substantially equivalent to the axial width l of the groove bottom (8).

9. A tyre according to Claim 6, characterised in that it comprises two distinct crown reinforcements (2A, 2B) located on opposite sides of the central groove (8), the reinforcement ply (12) arranged radially to the inside of the bead wire (7) being independent of the crown reinforcements (2A, 2B) and having an axial width such that its axial edges are juxtaposed radially with the axially inner edges respectively of the reinforcements (2A) and (2B).

**Patentansprüche**

1. Reifen mit mindestens zwei Laufflächen (1A) und (1B), die axial voneinander durch eine Verbindungszone (6) beabstandet sind, die eine Rille (8) und in ihrer Mitte eine Verstärkungsstange bzw. einen Verstärkungsdraht (7) mit einem Radius $R_T$

aufweist, der kleiner ist als der der Laufflächen (1A) und (1B), und radial innerhalb dessen ein radialer Karkassenmantel (10) durchläuft, der in jedem Wulst (4A, 4B) an mindestens einer Verankerungsstange bzw. einem Verankerungsdraht (5A, 5B) verankert ist, wobei dieser Mantel (10) radial von mindestens einem Scheitelmantel überdeckt ist, der aus mindestens aus zwei Draht- oder Seileinlagen gebildet ist, die bezüglich der Umfangsrichtung um einen Winkel geneigt sind, der zwischen 10° und 50° liegt, und die Laufflächen (1A) (1B) mit der Breite L verstärkt, dadurch gekennzeichnet, daß

- die Verbindungsrille (8) zwischen den beiden Laufflächen (1A) und (1B) eine Breite l aufweist, gemessen auf Höhe der Oberflächen der Laufflächen, die zwischen dem 0,1- und dem 0,25-fachen der Gesamtbreite 2L der Laufflächen (1A), (1B) liegt, eine Tiefe h, die mindestens gleich ist 0,6 $(R_S-R_E)$, und Wände (81A) (81B), die bezüglich einer Normalen N an der Lauffläche um einen Winkel $\alpha$ geneigt sind, der zwischen 15 und 25° liegt, wobei diese beiden Wände (81A) und (81B) sich radial im Inneren durch einen zylindrischen Abschnitt (80) vereinigen, der die genannten Wände tangiert, und daß
- der Radius $R_T$ des Schwerpunkts G des Querschnitts des Verstärkungsdrahtes (7) mindestens gleich sein soll $R_E + 0,1 (R_S - R_E)$, wobei $R_S$ der Radius der Punkte S des Karkassenmantels (10) ist, die von der Drehachse des Reifens am meisten entfernt sind, und $R_E$ der Radius der Punkte E des Karkassenmantels (10) ist, die axial von der Mittelebene XX' des Reifens am weitesten entfernt sind.

2. Reifen nach Anspruch 1, dadurch gekennzeichnet, daß die Vulkanisatschicht (14), die den Rillenboden (80) bildet und radial über dem Draht (7) gelegen ist, durch mindestens eine Seileinlage (13) verstärkt ist, wobei diese Einlage radial im wesentlichen in der Mitte der Schicht (14) angeordnet ist.

3. Reifen nach Anspruch 2, dadurch gekennzeichnet, daß die Verstärkungseinlage der Schicht (14) eine der Einlagen (11A) (11B) (11C) ist, die mit dem Scheitelmantel (2) durchgehend ausgebildet, während die anderen Einlagen (11A, 11B, 11C...) des genannten Mantels (2) axial unterbrochen sind und Blöcke (2A, 2B) bilden, die separat die Laufflächen (1A, 1B) verstärken.

4. Reifen nach Anspruch 2, dadurch gekennzeichnet, daß er zwei gesonderte Scheitelmäntel (2A, 2B) beiderseits der mittleren Rille (8) aufweist, wobei die Verstärkungseinlage (13) der Schicht (14) unabhängig ist von den Scheitelmänteln (2A) und (2B) und eine axiale Breite $\lambda$ aufweist, die im

wesentlichen gleich ist der axialen Breite des Bodens der Rille (8).

5. Reifen nach Anspruch 2, dadurch gekennzeichnet, daß er zwei gesonderte Scheitelmäntel (2A, 2B) beiderseits der mittleren Rille (8) aufweist, wobei die Verstärkungseinlage (13) der Schicht (14) unabhängig ist von den Scheitelmänteln (2A, 2B) und eine derartige axiale Breite aufweist, daß sich ihre axialen Ränder radial über die axial innenliegenden, jeweiligen Ränder der Scheitelmäntel (2A) und (2B) überlagern.

6. Reifen nach einem der Ansprüche 1 bis 5, dadurch gekennzeichnet, daß zwischen dem Verstärkungsdraht (7) und dem Karkassenmantel (10) radial mindestens eine Einlage aus Drähten oder Seilen (12) angeordnet ist.

7. Reifen nach Anspruch 6, dadurch gekennzeichnet, daß die radial im Inneren des Drahtes (7) angeordnete Einlage eine der durchgehenden Einlagen (11A) (11B) (11C) des Scheitelmantels (2) ist, während die anderen Einlagen (11A, 11B, 11C...) des genannten Mantels (2) axial nicht-durchgehend ausgebildet sind und Blöcke (2A, 2B) bilden, die getrennt die Laufflächen (1A, 1B) verstärken.

8. Reifen nach Anspruch 6, dadurch gekennzeichnet, daß er zwei getrennte Scheitelmäntel (2A, 2B) beiderseits der mittleren Rille (8) aufweist, wobei die Verstärkungseinlage (12), die radial im Inneren des Drahtes (7) angeordnet ist, unabhängig ist von den Scheitelmänteln, (2A) und (2B), und wobei ihre Enden axial um eine Größe λ' beabstandet sind, die im wesentlichen äquivalent ist zur axialen Breite l' des Bodens der Rille (8).

9. Reifen nach Anspruch 6, dadurch gekennzeichnet, daß er zwei getrennte Scheitelmäntel (2A, 2B) beiderseits der mittleren Rille (8) aufweist, wobei die Verstärkungseinlage (12), die radial im Inneren des Drahtes (7) angeordnet ist, unabhängig ist von den Scheitelmänteln (2A, 2B) und eine solche axiale Breite aufweist, daß ihre axialen Ränder radial den jeweiligen, axial innenliegenden Rändern der Mäntel (2A) und (2B) überlagert sind.

**FIG 1**

EP 0 613 793 B1

FIG 2

EP 0 613 793 B1

FIG 3

EP 0 613 793 B1

FIG 4

EP 0 613 793 B1